(19) Europäisches Patentamt
European Patent Office
Office européen des brevets

(11) Publication number: **0 410 879 A2**

# (12) EUROPEAN PATENT APPLICATION

(21) Application number: **90402137.5**

(22) Date of filing: **25.07.90**

(51) Int. Cl.5: **G11B 7/24**, G11B 7/00

(30) Priority: **25.07.89 JP 192177/89**

(43) Date of publication of application: **30.01.91 Bulletin 91/05**

(84) Designated Contracting States: **DE FR GB NL**

(71) Applicant: **DAICEL CHEMICAL INDUSTRIES, LTD.**
**No. 1-Banchi, Teppo-cho**
**Sakai-shi Osaka-fu 590(JP)**

(72) Inventor: **Tsumura, Masahiro**
**500, Kamiyobe, Yobe-ku**
**Himeji-shi, Hyogo(JP)**
Inventor: **Tsukada, Harumichi**
**3-1, Mita 4-chome, Tama-ku**
**Kawasaki-shi, Kanagawa(JP)**

(74) Representative: **Mongrédien, André et al**
**c/o SOCIETE DE PROTECTION DES INVENTIONS 25, rue de Ponthieu**
**F-75008 Paris(FR)**

## (54) Recordable CD-formatted optical disk.

(57) A formatted recordable optical disk comprising a substrate and a recording layer consisting of an organic layer formed directly on the substrate and a metallic reflective layer formed on the organic dye layer. When a laser beam for recording impinges on the optical disk from the substrate side, a cavity is produced between the substrate and the organic dye layer and a protrusion is formed in the metallic reflective layer so that the reflectance of the recording layer change.

EP 0 410 879 A2

# RECORDABLE CD-FORMATTED OPTICAL DISK

## Background of the Invention

### Field of the Invention

The present invention relates to a "write-once-read-many (WORM)" type optical disk, more particularly a recordable CD-formatted optical disk on which users can record their own information according to a CD format by means of a WORM writer and can read out it by means of a CD player.

### Description of the related art

There are variety types of optical disks including a "read-only memory" (ROM) type, the WORM type and an "erasable WORM" (E-WORM) type.

Among them, the ROM type optical disks for audio-uses (compact disk, CD) and for video-uses (video disk, VD) are the most popular and are used widely. In the case of CD, digital audio signals are embossed in a form of pits on a transparent plastic substrate by injection molding and a metallic reflective layer is deposited on the embossed surface by vacuum deposition. The digital pit information is read out by a laser beam in the function of reflectance of the embossed pit pattern. In other words, the CD and VD has no recording layer but information is stored in a form of pits which are embossed on a surface of the plastic substrate by injecting molding. The information pits are read out by variation of intensity of a laser beam which is reflected from a reflective layer of aluminium deposited on the pits.

Since the CD and VD are not recordable media on which users can record his own information, there is a demand to develop a "recordable" CD and VD on which users can record his own information which can be read out by a cheap CD player or a VD player. The norm of "recordable" CD-ROM was partly published (Nikkei Electronics, 1988, 3. 21, page 88 to 89) and several ideas how to produce CD-ROM have been proposed.

However, it is not easy to develop such a "recordable" CD that satisfies two requirements of (i) the same high reflectance as CD and (ii) the same high writing sensitivity as WORM. In fact, the reflective layer of CD and VD is made of aluminium which has a reflectance of about 80 % deposited on the embossed pit pattern by vacuum deposition method, while the reflectances of known recording layers for WORM disks are usually lower than 60 % and it is difficult to increase the reflectance of recording layer without spoiling the sensitivity at a writing stage and the C/N ratio at a read-out stage. In other words, it is not easy to compromise the above-mentioned two requirements of (i) a reflectance of higher than 60 % and (ii) a writing sensitivity of lower than 10 mW in laser power.

Therefore, an object of the present invention is to provide a WORM type optical disk which is recordable in a WORM witer and which can be played-back in a CD- or VD-player.

## Summary of the Invention

The present invention provides a formatted recordable optical disk comprising a substrate and a recording layer consisting of a layer of organic substance formed directly on the substrate and a reflective layer of metal formed on the layer of organic substance in such a manner that a cavity is produced between the substrate and the layer of organic substance when a laser beam for recording impinges on the optical disk from the substrate side, which result in that a protrusion is formed in the reflective layer of metal so that the reflectance of the recording layer change.

The recording layer according to the present invention has almost same high reflectance of more than 80 % as CD as well as almost same high writing sensitivity (a laser power of lower than 10 mW) as WORM. The optical disk according to the present invention has a C/N ratio of higher than 50 dB.

An essence of the present invention resides in the recording layer. Although theoretical recording

mechanism is not known now, when a laser beam for recording impinges on the optical disk according to the present invention from the substrate side, a cavity is produced between the substrate and the layer of organic substance and the metallic reflective layer swells to form a protrusion. Therefore, when a laser beam for read-out impinges the optical disk according to the present invention, difference in reflectance of the recording layer between the protrusions and a non-produced zone is detected to read out digital information recorded in the form of protrusion.

The initial reflectance of the recording layer before use is higher than 60 %, more preferably higher than 80 %. The organic layer has preferably a refractive index of more than 2.0. The format embossed on the substrate can be a CD format or a VD format. A protective layer of organic resin is preferably formed additionally on the metallic reflective layer.

Now, the present invention will be described with referring to an attached drawing.

## Brief Description of the Drawing

Fig. 1 is an illustrative cross sectional view of a recordable optical disk according to the present invention.

A recordable optical disk shown in Fig. 1 comprises a substrate 1, a recording layer 10 consisting of a layer of organic substance 2 formed directly on the substrate and a reflective layer of metal 3 formed on the organic substance layer 2, and a protective layer of organic resin 4 formed on the reflective metal layer 3. In Fig. 1, the format pattern embossed on an upper surface of the substrate 1 including guide grooves and control signal pits is not shown. The organic substance layer 2 is deposited on the format pattern.

When a laser beam for writing impinges on the disk from a side of the substrate 2, a cavity 5 is produced between the substrate 1 and the layer of organic substance 2 and the reflective layer of metal 3 swells to form a protrusion 6.

The disk substrate 1 may have the same dimensions as are requested to so-called CD or VD disk and may be transparent polycarbonate having a diameter of 12 cm or 30 cm and a thickness of 1.2 mm. The substrate has no information pit corresponding to audio or video signals but has trucking groove(s) along which a laser beam is guided on a surface of the substrate and format pits including address signals and control signals. Hereinafter, such substrates that have the trucking groove and the format pits are referred to be "formatted substrates". According to the present invention, the formatted disk means an optical disk which has trucking groove(s) and address signal pits and control signals pits but has no user information.

When organic solvent is used to form the organic layer 2, the formatted substrate 1 used in the present invention is preferably made of glass or epoxy resin or is preferably so-called 2-P (photopolymerization) disk, because these disks have enough solvent-resistance. The 2-P disks are prepared by the steps comprising spin-coating a flat glass disk with photo-polymerizable liquid resin such as UV curable resin and then curing the photo-polymerizable liquid resin through a patterned mask to leave the relief surface pattern on the flat glass disk. Injection-molded substrate made of transparent plastics such as polycarbonate, polymethylmethacrylate or amorphous polyolefin may be used in the present invention by selecting suitable solvents provided that the grooves and/or control pits are not damaged with the solvent.

An essence of the present invention resides in a combination of the organic substance layer 2 and the metallic reflective layer 3 of which the recording layer 10 consists. Two layers 2, 3 are combined in such a manner that a cavity 5 is produced between the substrate 1 and the layer of organic substance 2 when a laser beam for recording impinges on the optical disk, resulting in that a protrusion 6 is formed in the reflective layer of metal 3 so that the reflectance of the recording layer 10 change.

The layer of organic substance 2 has a refractive index of more than 2.0 and has a thickness between 1 nm and 500 nm, preferably between 10 nm and 200 nm.

The layer of organic substance 2 is preferably one of organic dyes selected from the group comprising phthalocyanine dye, cyanine dye and azulene dye from the view point of sensitivity. A variety of derivatives of these dyes are available on the market. The layer of organic substance 2 can be formed by spin-coating technique in which the organic dye is dissolved in suitable solvent. The solvent must be selected in order not dissolve the format relief pattern on the substrate.

The layer of metal used in the present invention is preferably made of Al, Au or the like which has high reflectance of more than 80 % and can be formed by physical vapour deposition process such as vacuum deposition, sputtering, ion-plating or the like. The metallic reflective layer has a film thickness between 1 nm and 100 nm, preferably between 5 nm and 50 nm.

The protective layer 4 of organic resin may be of any one of known protective coating materials and is

preferably ultra-violet curable resin. The thickness of the protective layer is not critical but is preferably more than 100 nm. The protective layer 4 of organic resin can be formed by spin-coating technique.

Now, the present invention will be described with reference to examples but the present invention is not limited to the examples.

Example 1

A layer of 130 nm of a 0.7 % 2, 2′-dichloroethane solution of a cyanine type organic dye was spin-coated on a glass disk substrate having a diameter of 130 nm and a thickness of 1.2 nm. The glass disk substrate has a relief format pattern according to CD system of a spiral groove and control pits produced by 2-P (photo-polymerization) process.

The cyanine type organic dye used is represented by a formula:

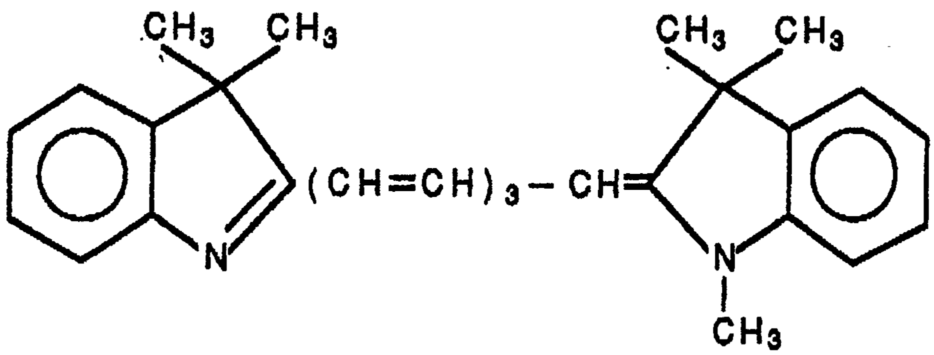

Then, a layer of Au having a thickness of 30 nm is deposited thereon by DC sputtering. The reflectance of this optical disk was measured by a light having a wave length of 780 nm to find a value of reflectance of 80 %.

Recording performance of this CD formatted optical disk is evaluated as following.

Repeating signals (frequency of 750 KHz, duty of 30 %) were recorded on the disk at a radius of 80 nm by means of a laser beam emitted from a semiconductor laser and having a wave length of 780 nm, at a revolution speed of 300 rpm and with varying recording powder to find the maximum C/N ratio of 53 dB at 7 mW of recording powder.

Example 2

Example 1 is repeated but the cyanine type organic dye was replaced by phthalocyanine type.

The phthalocyanine type organic dye used is a toluene solution (dye : solvent = 1 : 60 wt %) of OREONOL First Blue EL, a product of Sumitomo Chemical Industries Co., Ltd.

The performance of this optical disk was evaluated by the same method as Example 1.

The initial reflectance of this optical disk was 80 % (780 nm).

The maximum C/N ratio was 50 dB at a recording powder of 7 mW.

Example 3

A layer of 130 nm of a phthalocyanine type organic dye was spin-coated on a disk substrate having a diameter of 130 nm and a thickness of 1.2 mm and made of polycarbonate. A spiral groove is impressed on the substrate.

The phthalocyanine type organic dye used is represented by a formula:

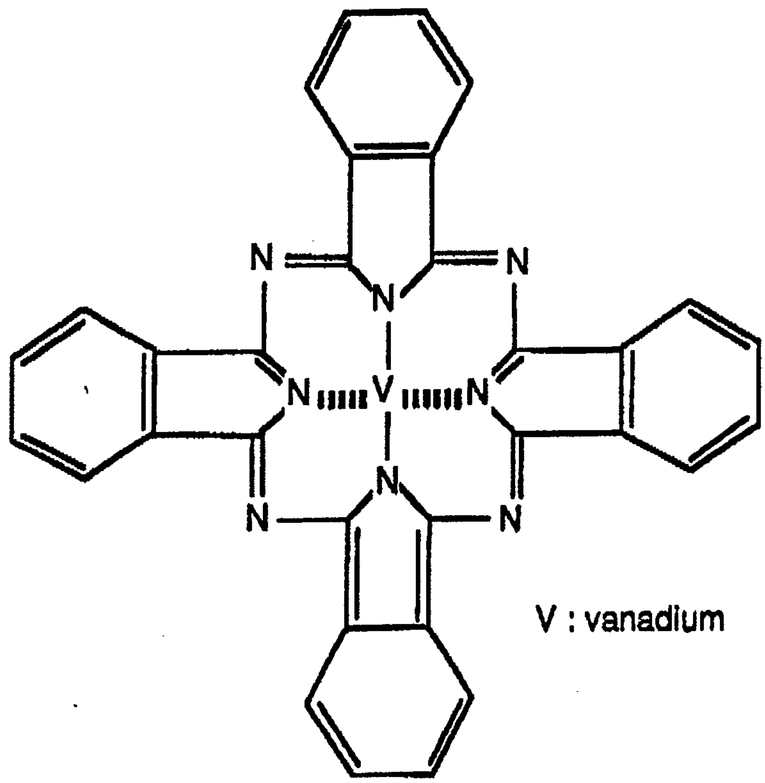

V : vanadium

Then, a layer of Au having a thickness of 30 nm is deposited thereon by DC sputtering. The reflectance of this disk substrate measured at 780 nm is shown in Table 1.

The performance of this optical disk was evaluated by the same method as Example 1. The result is shown in Table 1.

Example 4

A layer of 130 nm of a cyanine type organic dye was spin-coated on a polycarbonate substrate having a diameter of 130 mm and having a spiral groove thereon.

The cyanine type organic dye used is represented by a formula:

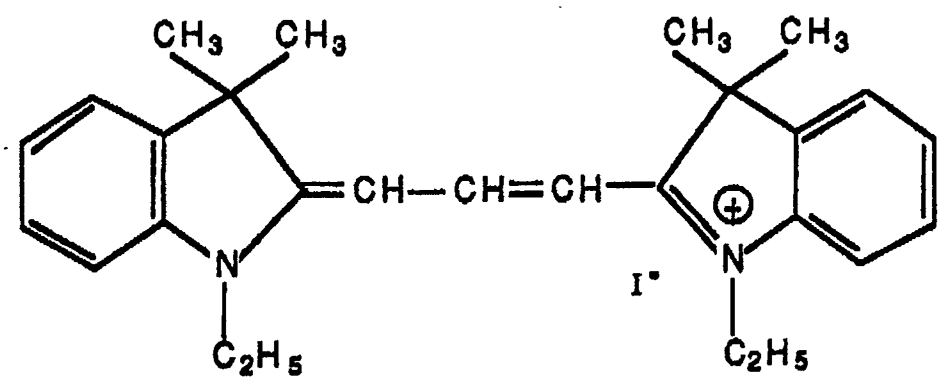

Then, a layer of Au having a thickness of 30 nm is deposited thereon by DC sputtering. Finally, ultra-violet curable resin was spin-coated and cured by ultra-violet. The reflectance of this disk substrate measured at 780 nm is shown in Table 1.

The performance of this optical disk was evaluated by the same method as Example 1. The result is shown in Table 1.

Comparative Example 1

A layer of gold (Au) having a thickness of 30 nm is deposited by DC sputtering directly on a polycarbonate substrate having a diameter of 130 nm and having a spiral groove thereon. The reflectance measured at 780 nm is shown in Table 1.

The performance of this optical disk was evaluated by the same method as Example 1. The result is shown in Table 1.

Comparative Example 2

A layer of TeSe (Te:Se = 90:10) having a thickness of 50 nm was deposited by DC sputtering on a polycarbonate substrate having a diameter of 130 mm and having a spiral groove thereon. The reflectance of this disk substrate measured at 780 nm is shown in Table 1.

The performances of this optical disk was evaluated by the same method as Example 1. The result is shown in Table 1.

Table 1

| | Reflectance (%) | C/N ratio (dB) | power (mW) |
|---|---|---|---|
| Example 3 | 78 | 55 | 6 |
| Example 4 | 80 | 53 | 7 |
| Comparative Example 1 | 85 | unrecordable | |
| Comparative Example 2 | 47 | 53 | 4.5 |

**Claims**

1. A formatted recordable optical disk comprising a substrate (1) and a recording layer (10) consisting of a layer of organic substance (2) formed directly on said substrate and a reflective layer of metal (3) formed on said layer of organic substance in such a manner that a cavity (5) is produced between said substrate (1) and said layer of organic substance (2) when a laser beam (L) for recording impinges on the optical disk from said substrate side, which result in that a protrusion (6) is formed in said reflective layer of metal (3) so that the reflectance of said recording layer (10) change.

2. The formatted recordable optical disk set forth in Claim 1 wherein an initial reflectance of said recording layer (10) before use is higher than 60 %.

3. The formatted recordable optical disk set forth in Claim 1 or 2 wherein a protective layer of organic resin (4) is formed on said layer of reflective layer of metal (4).

4. The formatted recordable optical disk set forth in any one of Claim 1 to 3 wherein said layer of organic substance (2) has a refractive index on more than 2.0.

5. The formatted recordable optical disk set forth in any one of Claim 1 to 4 wherein said organic substance (2) is at least one of organic dyes selected from the group comprising phthalocyanine type, cyanine type and azulene type.

6. The formatted recordable optical disk set forth in any one of Claim 1 to 5 wherein said substrate (1) is made of transparent plastics selected from the group comprising polycarbonate, polymethylmethacrylate, epoxy resin and amorphous polyolefins.

7. The formatted recordable optical disk set forth in any one of Claim 1 to 5 wherein said substrate (1) is 2-P (photo-polymerization) disk.

FIGURE 1

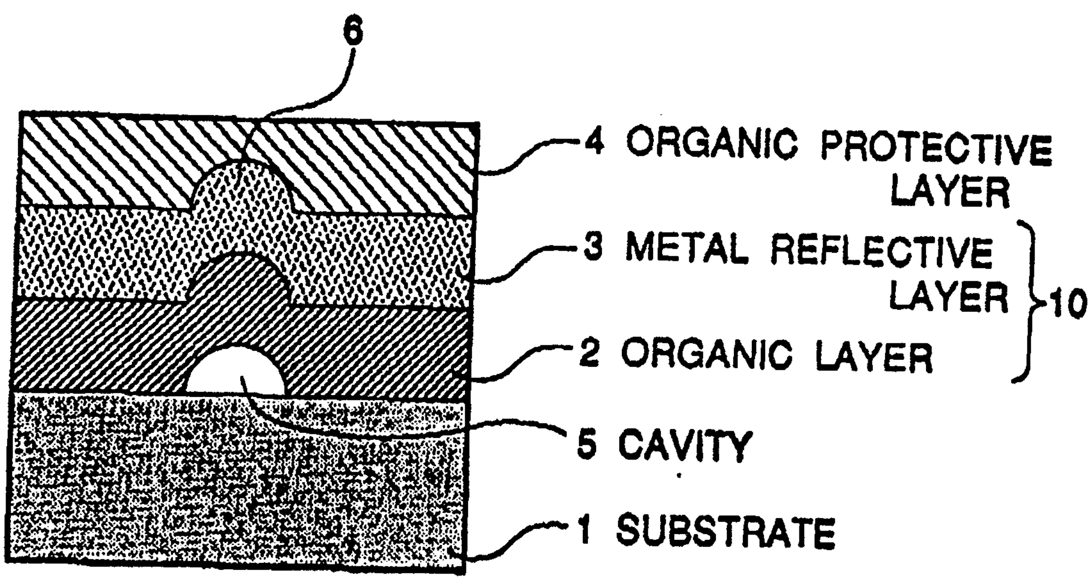
6
4 ORGANIC PROTECTIVE LAYER
3 METAL REFLECTIVE LAYER
2 ORGANIC LAYER
10
5 CAVITY
1 SUBSTRATE